(19) Europäisches Patentamt
European Patent Office
Office européen des brevets

(11) **EP 1 221 582 B1**

(12) **EUROPÄISCHE PATENTSCHRIFT**

(45) Veröffentlichungstag und Bekanntmachung des Hinweises auf die Patenterteilung:
**13.03.2013   Patentblatt 2013/11**

(51) Int Cl.:
*G02B 7/32* *(2006.01)*       *G01S 7/481* *(2006.01)*
*G01S 17/02* *(2006.01)*

(21) Anmeldenummer: **01130581.0**

(22) Anmeldetag: **21.12.2001**

(54) **Optoelektronische Vorrichtung**

Optoelectronic device

Dispositif opto-électronique

(84) Benannte Vertragsstaaten:
**DE**

(30) Priorität: **05.01.2001   DE 10100353**

(43) Veröffentlichungstag der Anmeldung:
**10.07.2002   Patentblatt 2002/28**

(73) Patentinhaber: **Leuze electronic GmbH + Co. KG**
**73277 Owen/Teck (DE)**

(72) Erfinder: **Argast, Martin**
**72584 Hülben (DE)**

(74) Vertreter: **Ruckh, Rainer Gerhard**
**Fabrikstrasse 18**
**73277 Owen/Teck (DE)**

(56) Entgegenhaltungen:
**EP-A- 1 037 069       DE-A- 3 543 648**
**DE-A- 19 833 207     US-A- 4 896 343**
**US-A- 5 418 608       US-A- 5 760 886**
**US-A- 5 872 880       US-A- 6 122 039**

**Beschreibung**

Die Erfindung betrifft eine optoelektronische Vorrichtung gemäß dem Oberbegriff des Anspruchs 1.

Eine derartige Vorrichtung ist aus der DE 198 21 974 A1 bekannt. Die Vorrichtung ist als sogenannte 3D-Entfernungskamera ausgebildet und weist einen Sender auf, mit welchem eine zu erfassende Oberfläche eines Objektes flächig ausgeleuchtet wird. Der Empfänger der 3D-Entfernungsbildkamera besteht aus einer flächigen Anordnung von Empfangselementen, mittels derer eine Distanzmessung durchgeführt wird. Die Distanzmessung erfolgt dabei nach dem Phasenmessprinzip. Das vom Sender emittierte Sendelicht ist mit einer vorgegebenen Phase amplitudenmoduliert. In den Empfangselementen wird jeweils die Phasendifferenz zwischen dem Sendelicht und dem von der Objektoberfläche zurückreflektierten Empfangslicht ausgewertet. Die so ermittelten Phasendifferenzen bieten ein Maß für die jeweilige Objektdistanz. Die Empfangselemente sind als sogenannte Fotomischdetektoren ausgebildet, mittels derer eine genaue Distanzmessung auch dann ermöglicht wird, wenn die Objektoberfläche Kontrastschwankungen in Form von Hell-Dunkelgrenzen aufweist. Die einzelnen Fotomischdetektoren werden mit dem Modulationstakt des Senders angesteuert, wodurch das Empfangslicht pixelweise für die einzelnen Empfangselemente demoduliert wird, so dass entsprechend dem Phasenmessverfahren die jeweilige Distanz ermittelt werden kann.

Aus der DE 197 57 595 C2 ist eine weitere 3D-Entfernungskamera bekannt. Im Unterschied zu dem Gegenstand der DE 198 21 974 A1 ist bei dieser 3D-Entfernungskamera ein Empfänger vorgesehen, dessen Empfangselemente als CMOS-Elemente ausgebildet sind, mittels derer nach dem Lichtlaufzeitverfahren eine Distanzbestimmung durchgeführt wird.

Ein Nachteil dieser Vorrichtungen besteht darin, dass die flächige Beleuchtung der Objektoberfläche eine große Lichtleistung des Senders voraussetzt, um die erforderliche Leistungsdichte auf dem Objekt zu gewährleisten. Da zur Durchführung der Distanzmessung als Sender ein Laser verwendet werden muss und da dieser zur Erzielung der erforderlichen Leistungsdichte auf der Objektoberfläche bei hoher Leistung betrieben werden muss, stellt sich bei derartigen Vorrichtungen das Problem der Augensicherheit. Zur Erfüllung der Anforderungen für eine augensichere Betriebsweise muss der Laser auf Leistungen von etwa 1mW begrenzt werden.

Bei diffuser Reflektion des Empfangslichts an der Objektoberfläche nimmt die Leistung des Empfangslichtes mit dem Quadrat der Entfernung ab. Aufgrund der begrenzten Sendeleistung des Senders können somit Objekte nur in äußerst geringen Distanzen sicher detektiert werden.

Außerdem muss bei derartigen Vorrichtungen eine große Datenmenge ausgewertet werden, was die Dynamik des Systems stark begrenzt.

Aus der US-A-5 418 608 ist eine Sensoreinheit zur Ermittlung von dreidimensionalen Bildern von Unterwasser-Oberflächen bekannt. Die Sensoreinheit umfasst als Lichtquelle einen Laser, wobei die von diesem emittierten Lichtstrahlen über zwei separate motorische Spiegel in zwei Raumrichtungen abgelenkt. Die von einem Objekt zurückreflektierten Lichtstrahlen werden an den Spiegeln vorbei direkt zu einem Empfänger geführt, welche von einem PSD-Element gebildet ist.

Aus der US 5,760,886 ist ein scannender Distanzsensor bekannt, der einen Lichtstrahlen emittierenden Sender, einen Scanner zur Strahlablenkung der Lichtstrahlen und einen Empfänger mit mehreren Empfangselementen aufweist. Zur Verminderung von Streulichteffekten werden in Abhängigkeiten der aktuellen Strahlablenkung mit dem Scanner Empfangssignale von Empfangselementen verworfen, die außerhalb des Bereichs der Lichtstrahlen sind.

Der Erfindung liegt die Aufgabe zugrunde eine optoelektronische Vorrichtung der eingangs genannten Art so auszubilden, dass Objekte schnell und sicher insbesondere auch auf größere Distanz erfassbar sind.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße optoelektronische Vorrichtung stellt eine 3D-Entfernungskamera dar. Ein wesentlicher Vorteil der erfindungsgemäßen 3D-Entfernungskamera besteht darin, dass eine Objektoberfläche nicht flächig ausgeleuchtet wird, sondern periodisch mittels der Sendelichtstrahlen abgetastet wird. Dabei ist der Strahldurchmesser der Sendelichtstrahlen erheblich kleiner als die abzutastende Objektoberfläche. Auch ist der auf den Empfänger abgebildete Sendelichtfleck der Sendelichtstrahlen erheblich kleiner als die Fläche des aus den Empfangselementen bestehenden Empfängers. Durch die periodische Abtastung der Objektoberfläche mittels der Sendelichtstrahlen kann die Leistungsdichte des Sendelichts auf der Objektoberfläche im Vergleich zu Systemen, die mit flächigem Sendelicht operieren, erheblich gesteigert werden, ohne dass die Anforderungen an die Augensicherheit verletzt werden.

Damit kann mit der erfindungsgemäßen optoelektronischen Vorrichtung auch bei großen Objektdistanzen eine zuverlässige Bestimmung eines Distanzprofils einer Objektoberfläche durchgeführt werden.

Durch die periodische Abtastung der Objektoberfläche mittels der über den Schwingspiegel geführten Sendelichtstrahlen kann auch die Datenmenge bei der Auswertung der an den Empfangselementen anstehenden Empfangssignale erheblich reduziert werden, ohne dass dies zu einem Informationsverlust bei der Bestimmung des Distanzprofils der Objektoberfläche führt.

Dabei wird der Umstand ausgenutzt, dass aufgrund des geringen Strahldurchmessers der Sendelichtstrahlen bei der Objektdetektion immer nur ein kleiner, definierter Teil der Empfangselemente des Empfängers von den vom Objekt zurückreflektierten Empfangslichtstrahlen ausgeleuchtet wird. Erfindungsgemäß wird daher die Auslenkung des Schwingspiegels mit dem Ausleseprozess der Empfangselemente des Empfängers derart synchronisiert, dass nur die Empfangssignale derjenigen Empfangselemente in die Auswerteeinheit eingelesen werden, welche im Bereich der auf den Empfänger auftreffenden Empfangslichtstrahlen und deren Nachbarzellen liegen. Die Empfangssignale der übrigen Empfangselemente werden dagegen nicht ausgewertet.

Die Erfindung wird im Nachstehenden anhand der Zeichnungen erläutert. Es zeigen:

Figur 1: Blockschaltbild eines ersten Ausführungsbeispiels der optoelektronischen Vorrichtung.

Figur 2: Schematische Darstellung der optischen Komponenten der optoelektronischen Vorrichtung gemäß Figur 1.

Figur 3: Schematische Darstellung eines Schwingspiegels für die Vorrichtung gemäß den Figuren 1 und 2.

Figuren 4a -c: Verschiedene Muster von Abtastlinien auf einer Abtastfläche, welche mit den Sendelichtstrahlen der Vorrichtung gemäß den Figuren 1 und 2 erzeugt werden.

Figur 5a: Erstes Ausführungsbeispiel der optoelektronischen Vorrichtung gemäß den Figuren 1 und 2 zur Abtastung einer Objektkante.

Figur 5b: Zweites Ausführungsbeispiel der optoelektronischen Vorrichtung gemäß den Figuren 1 und 2 zur Abtastung einer ebenen Objektoberfläche.

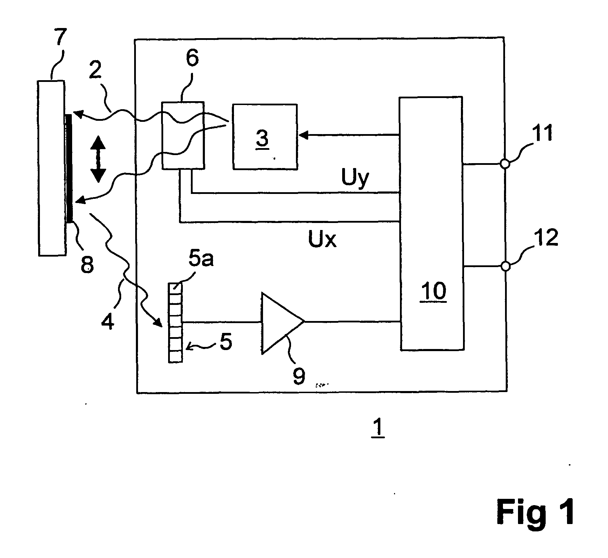

Figur 1 zeigt das Blockschaltbild eines Ausführungsbeispiels der erfindungsgemäßen optoelektronischen Vorrichtung 1. Die optoelektronische Vorrichtung 1 ist als 3D-Entfernungskamera ausgebildet und weist einen Sendelichtstrahlen 2 emittierenden Sender 3 und einen Empfangslichtstrahlen 4 empfangenden Empfänger 5 auf. Der Sender 3 ist von einer Laserdiode gebildet. Der Empfänger 5 besteht aus einer flächigen Anordnung von Empfangselementen 5a. Die Empfangselemente 5a sind vorzugsweise identisch ausgebildet und sind in einer Ebene liegend angeordnet. Vorzugsweise ergänzen sich die fotoempfindlichen Flächen der Empfangselemente 5a zu einer quadratischen Empfängerfläche. Die Sendelichtstrahlen 2 werden durch einen Schwingspiegel 6 periodisch in zwei Raumrichtungen abgelenkt, so dass die Sendelichtstrahlen 2 auf dem zu detektierenden Objekt 7 eine Abtastfläche 8 überstreichen. Dabei werden die vom Objekt 7 reflektierten Empfangslichtstrahlen 4 nicht über den Schwingspiegel 6 geführt und gelangen direkt zum Empfänger 5. In dem Schwingspiegel 6 ist eine nicht dargestellte Ansteuereinheit integriert. In dieser werden Ansteuerspannungen $U_x$, $U_y$ generiert, mittels derer die Sendelichtstrahlen 2 in zwei Raumrichtungen x und y abgelenkt werden. Die Empfangssignale an den Ausgängen der Empfangselemente 5a werden in einem Verstärker 9 verstärkt und dann auf eine Auswerteeinheit 10 geführt, die vorzugsweise von einem Mikroprozessor gebildet ist.

Mit der optoelektronischen Vorrichtung 1 wird ein Distanzprofil einer Objektoberfläche ermittelt. Der Sender 3 und die Empfangselemente 5a bilden dabei nach dem Lichtlaufzeitverfahren arbeitende Distanzsensoren. Die Distanzmessung kann nach dem Phasenmessprinzip erfolgen. In diesem Fall sind die Empfangselemente 5a beispielsweise als Fotomischdetektoren ausgebildet, wie sie in der DE 198 21 974 A1 beschrieben sind. Dabei wird dem vom Sender 3 emittierten Sendelichtstrahlen 2 mittels einer nicht dargestellten Modulationseinheit eine Amplitudenmodulation aufgeprägt. In der Auswerteeinheit 10 wird die Phasendifferenz zwischen den vom Sender 3 emittierten Sendelichtstrahlen 2 und den vom Objekt 7 zum jeweiligen Empfangselement 5a zurückreflektierten Empfangslichtstrahlen 4 berechnet. Aus diesen Phasendifferenzen werden die Distanzwerte für die aktuellen Ablenkpositionen der Sendelichtstrahlen 2 ermittelt. Alternativ kann die Distanzmessung nach dem Impulslaufzeitverfahren erfolgen. In diesem Fall emittiert der Sender 3 Sendelichtstrahlen 2 in Form von vorgegebenen Folgen von Sendelichtimpulsen. In der Auswerteeinheit 10 wird zur Distanzbestimmung die Laufzeit der vom Sender 3 emittierten und als Empfangslichtimpulse zum Empfänger 5 zurückreflektierten Sendelichtimpulse ermittelt. In diesem Fall sind die Empfangselemente 5a insbesondere als CMOS-Elemente ausgebildet, wie sie in der DE 197 57 595 C2 beschrieben sind.

Das in der Auswerteeinheit 10 ermittelte Distanzprofil einer Objektoberfläche wird über eine Schnittstelleneinheit 11, die eine serielle Schnittstelle bildet und ebenfalls an die Auswerteeinheit 10 angeschlossen ist, ausgegeben. Zur Parametrierung der optoelektronischen Vorrichtung 1 sind über einen Parametriereingang 12 Parameterwerte eingebbar.

Als Parameterwert ist insbesondere ein Schwellwert eingebbar, mit welchem die Empfangssignale der Empfangselemente 5a bewertet werden. Mittels der Schwellwertbewertung der Empfangselemente 5a werden innerhalb einer Abtastperiode die nicht belichteten Empfangselemente 5a erfasst. Während der folgenden Abtastperiode werden dann nur die Empfangselemente 5a, die zuvor belichtet wurden, sowie deren Nachbarelemente zur Auswertung herangezogen. Durch die Einbeziehung der Nachbarelemente in die Auswertung wird auch im Falle einer Objektbewegung zwischen zwei Abtastperioden noch eine sichere Objektdetektion erhalten. Durch diese Datenreduktion kann die Dynamik der 3D-Entfernungskamera erheblich gesteigert werden. Wurde während einer oder mehrerer Abtastperioden kein Objekt erkannt, wird bei der ersten Abtastperiode, bei welcher wieder ein Objekt registriert wird, zunächst die gesamte Empfängerfläche ausgewertet. Bei den anschließenden Objektdetektionen erfolgt dann wieder die genannte Datenreduktion.

Alternativ oder zusätzlich kann eine Datenreduktion auch derart erfolgen, dass die Auslesung von Empfangssignalen der verschiedenen Empfangselemente 5a mit der Ablenkbewegung des Schwingspiegels 6 gekoppelt ist. Dabei wird der Umstand ausgenutzt, dass je nach aktueller Stellung des Schwingspiegels 6 die vom Objekt 7 zurückreflektierten Empfangslichtstrahlen 4 nur auf bestimmte Bereiche des Empfängers 5 auftreffen. Für jede aktuelle Winkelposition des Schwingspiegels 6 werden dann nur die Empfangssignale derjenigen Empfangselemente 5a ausgelesen, welche in den belichteten Bereichen des Empfängers 5 liegen.

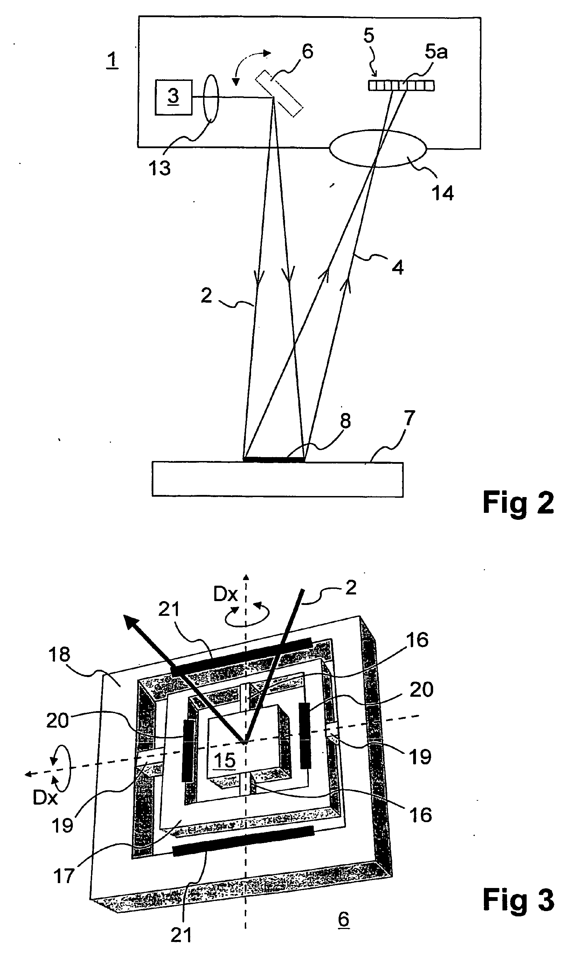

Figur 2 zeigt die optischen Komponenten der optoelektronischen Vorrichtung 1 gemäß Figur 1. Dem Sender 3 ist ein Kollimator 13 zur Strahlformung der Sendelichtstrahlen 2 nachgeordnet. Die kollimierten Sendelichtstrahlen 2 werden durch den Schwingspiegel 6 in zwei Raumrichtungen abgelenkt, wobei der Winkelbereich in jeder Raumrichtung, welcher von dem am Schwingspiegel 6 abgelenkten Sendelichtstrahlen 2 überstrichen wird, im Bereich zwischen 5° und 20° liegt und vorzugsweise 10° beträgt. Die von dem Objekt 7 zurückreflektierten Empfangslichtstrahlen 4 werden durch eine Empfangsoptik 14 auf den Empfänger 5 abgebildet.

Figur 3 zeigt eine Detaildarstellung des Schwingspiegels 6. Der Schwingspiegel 6 ist als mikromechanischer Scannerspiegel ausgebildet, welcher ein plattenförmiges Spiegelelement 15 aufweist, an welchem die Sendelichtstrahlen 2 reflektiert werden. Das Spiegelelement 15 besteht aus einer einkristallinen Siliziumplatte, welche mit einer Aluminiumschicht beschichtet ist. Diese bildet die Spiegelfläche, an welcher die Sendelichtstrahlen 2 reflektiert werden.

Das Spiegelelement 15 ist mittels zwei ersten Torsionsstegen 16 an einem ersten Rahmen 17 befestigt. Die Torsionsstege 16 münden an gegenüberliegenden Seitenwänden des Spiegelelements 15 aus und verlaufen entlang einer ersten Drehachse $D_x$. Durch eine Torsion der Torsionsstege 16 ist das Spiegelelement 15 bezüglich der Drehachse $D_x$ im ersten Rahmen 17 drehbar gelagert.

Der erste Rahmen 17 liegt innerhalb eines zweiten Rahmens 18. Dabei sind die beiden Rahmen 17, 18 über zweite Torsionsstege 19 verbunden, die in einer zweiten Drehachse $D_y$ verlaufen. Durch Torsion der zweiten Torsionsstege 19 ist der erste Rahmen 17 mit dem Spiegelelement 15 bezüglich der Drehachse $D_y$ im zweiten Rahmen 18 drehbar gelagert.

Das plattenförmige Spiegelelement 15 weist einen quadratischen Querschnitt auf. Der erste und zweite Rahmen 17, 18 weisen quadratische Konturen auf und sind konzentrisch zum Spiegelelement 15 angeordnet.

In den parallel zur ersten Drehachse $D_x$ verlaufenden Wandsegmenten des ersten Rahmens 17 sind erste Antriebselektroden 20 vorgesehen. Durch Anlegen von Ansteuerspannungen $U_x$ mit einer vorgegebenen Anregungsfrequenz $f_x$ wird das Spiegelelement 15 mit der entsprechenden Anregungsfrequenz $f_x$ bezüglich der Drehachse $D_x$ gedreht.

In den parallel zur zweiten Drehachse $D_y$ verlaufenden Wandsegmenten des zweiten Rahmens 18 sind zweite Antriebselektroden 21 vorgesehen. Durch Anlegen von Ansteuerspannungen $U_y$ mit einer vorgegebenen Anregungsfrequenz $f_y$ wird der erste Rahmen 17 mit der entsprechenden Anregungsfrequenz $f_y$ bezüglich der zweiten Drehachse $D_y$ gedreht.

Durch Einstellen der beiden Anregungsfrequenzen $f_x$, $f_y$ der an den Antriebselektroden 20, 21 anliegenden Ansteuerspannungen $U_x$, $U_y$ ist der räumliche Verlauf der Abtastung der Abtastfläche 8 einstellbar.

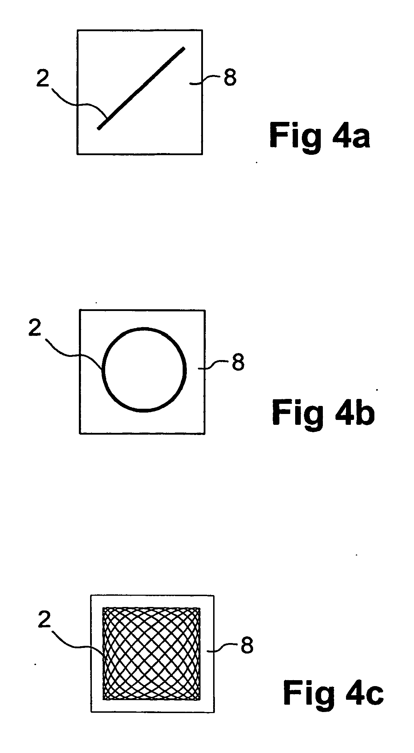

Die Figuren 4a - c zeigen verschiedene Abtastlinien auf einer Abtastfläche 8 eines Objektes 7, welche mittels der über den Schwingspiegel 6 abgelenkten Sendelichtstrahlen 2 erzeugt werden.

Figur 4a zeigt eine Abtastlinie in Form einer geraden Linie. Dieses Muster einer Abtastlinie wird durch gleich groß gewählte Anregungsfrequenzen $f_x$, $f_y$ erhalten.

Figur 4b zeigt eine kreisförmige Abtastlinie.

Bei dem Ausführungsbeispiel gemäß Figur 4c verläuft der Strahlfleck der Sendelichtstrahlen 2 in der Ebene der Abtastfläche 8 entlang von Abtastlinien, welche ein Lissajousmuster bilden.

Durch entsprechende Geometrien und Einstellung der Anregungsfrequenzen $f_x$, $f_y$ des Schwingspiegels 6 ist dieses Lissajousmuster gezielt vorgebbar.

Dabei ist insbesondere die Anzahl n der Abtastlinien innerhalb der Abtastfläche 8 gemäß folgender Beziehung vorgebbar.

$$n = ABS\ (1/(p-1))$$

Dabei bildet p das Verhältnis der Anregungsfrequenzen $f_x$, $f_y$. Die Abkürzung ABS steht für die Bildung des Absolutbezugs.

Auch die Bildfrequenz $f_b$, das heißt die Geschwindigkeiten der Abtastung der Abtastfläche 8 ist gemäß folgender Beziehung einstellbar.

$$f_b \sim f_x/n$$

Das heißt die Bildfrequenz $f_b$ ist proportional zu der Anregungsfrequenz $f_x$ (und auch $f_y$) und umgekehrt proportional zur Anzahl n der Abtastlinien pro Abtastfläche 8.

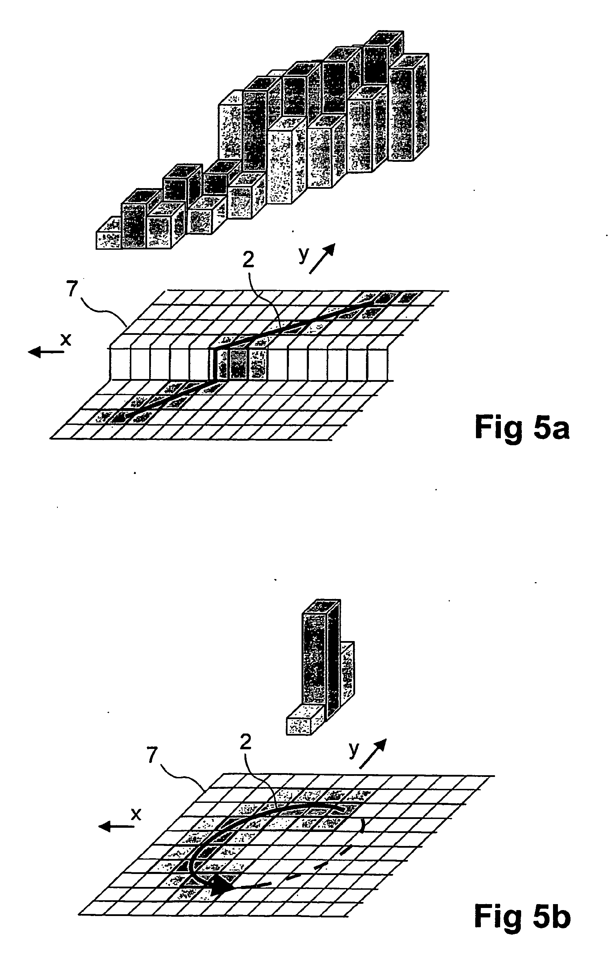

Figur 5a zeigt ein erstes Anwendungsbeispiel der optoelektronischen Vorrichtung 1. Das Objekt 7 weist zwei ebene Teilflächen auf, die durch eine Kante getrennt sind.

Die Sendelichtstrahlen 2 werden im vorliegenden Fall entlang einer geradlinig verlaufenden Abtastlinie periodisch geführt.

Die diagonale Linie als Sendelichtmuster wird so gelegt, dass die zu detektierende Kante möglichst quer geschnitten wird. Zur Veranschaulichung wurde das Zellgitter der Empfangselemente 5a des Empfängers 5 auf das Objekt 7 projiziert und darüber die Empfangssignalpegel der Empfangselemente 5a als Balkendiagramme aufgetragen. Nur die in Figur 5a getönt dargestellten Zellen liefern dabei Empfangssignale, die den Schwellwert überschreiten. Nur die Empfangssignale dieser Empfangselemente 5a werden in die Auswerteeinheit 10 eingelesen und dort ausgewertet. Daraus wird ersichtlich, dass sich die Auswertung auf wenige Empfangselemente 5a beschränken kann und dennoch eine genaue Aussage über die Kantenstruktur des Objektes 7 liefert.

Figur 5b zeigt ein zweites Anwendungsbeispiel, bei welchem die Sendelichtstrahlen 2 entlang einer kreisförmigen Abtastlinie geführt sind.

Bezugszeichenliste

(1) Optoelektronische Vorrichtung
(2) Sendelichtstrahlen
(3) Sender
(4) Empfangslichtstrahlen
(5) Empfänger
(5a) Empfangselemente
(6) Schwingspiegel
(7) Objekt
(8) Abtastfläche
(9) Verstärker
(10) Auswerteeinheit
(11) Schnittstelleneinheit
(12) Parametriereingang
(13) Kollimator
(14) Empfangsoptik
(15) Spiegelelement
(16) Erster Torsionssteg
(17) Erster Rahmen
(18) Zweiter Rahmen
(19) Zweiter Torsionssteg
(20) Erste Antriebselektrode
(21) Zweite Antriebselektrode

$D_x$ Erste Drehachse
$D_y$ Zweite Drehachse
fb Bildfrequenz

fx Anregungsfrequenz
fy Anregungsfrequenz
Ux Ansteuerspannung
Uy Ansteuerspannung

**Patentansprüche**

**1.** Optoelektronische Vorrichtung zur Ermittlung von Distanzprofilen von Objekten mit einem Sendelichtstrahlen emittierenden Sender, einem aus einer flächigen Anordnung von Empfangselementen bestehenden Empfänger, auf welchen an einem Objekt (7) reflektierte Sendelichtstrahlen (2) als Empfangslichtstrahlen (4) zum Empfänger (5) geführt sind, sowie einer Auswerteeinheit zur Auswertung von in den Empfangselementen generierten Empfangssignalen, wobei nur die Sendelichtstrahlen (2) über einen Schwingspiegel (6) periodisch in zwei Raumrichtungen abgelenkt werden, so dass diese auf der Oberfläche des Objekts (7) eine Abtastfläche (8) überstreichen, **dadurch gekennzeichnet, dass** die Auswerteeinheit dafür ausgebildet ist die Empfangssignale der Empfangselemente (5a) mit einem Schwellwert zu bewerten, dass mittels der Schwellwertbewertung der Empfangselemente (5a) innerhalb einer Abtastperiode die nicht belichteten Empfangselemente (5a) erfasst werden, und dass während der folgenden Abtastperiode dann nur die Empfangselemente (5a), die zuvor belichtet wurden, sowie deren Nachbarelemente zur Auswertung herangezogen werden.

**2.** Optoelektronische Vorrichtung nach Anspruch 1, **dadurch gekennzeichnet, dass** der Sender (3) von einer Laserdiode gebildet ist.

**3.** Optoelektronische Vorrichtung nach einem der Ansprüche 1 oder 2, **dadurch gekennzeichnet, dass** der Empfänger (5) aus einer quadratischen Anordnung identisch ausgebildeter Empfangselemente (5a) besteht.

**4.** Optoelektronische Vorrichtung nach einem der Ansprüche 1 - 3, **dadurch gekennzeichnet, dass** die Distanzbestimmung in den Empfangselementen (5a) nach dem Lichtlaufzeitverfahren erfolgt.

**5.** Optoelektronische Vorrichtung nach Anspruch 4, **dadurch gekennzeichnet, dass** die Distanzmessung nach dem Phasenmessprinzip erfolgt, wobei den Sendelichtstrahlen (2) des Senders (3) eine Amplitudenmodulation aufgeprägt ist, und wobei zur Distanzbestimmung die Phasendifferenz zwischen den vom Sender (3) emittierten Sendelichtstrahlen (2) und den von einem Objekt (7) zu einem Empfangselement (5a) des Empfängers (5) zurückreflektierten Empfangslichtstrahlen (4) ermittelt wird.

6. Optoelektronische Vorrichtung nach Anspruch 4, **dadurch gekennzeichnet, dass** die Distanzmessung nach dem Impulslaufzeitverfahren erfolgt, wobei vom Sender (3) die Sendelichtstrahlen (2) als Folgen von Sendelichtimpulsen emittiert werden, und wobei zur Distanzbestimmung die Laufzeit der vom Sender (3) emittierten und als Empfangslichtimpulse von einem Objekt (7) zu einem Empfangselement (5a) des Empfängers (5) zurückreflektierten Sendelichtimpulse ermittelt wird.

7. Optoelektronische Vorrichtung nach einem der Ansprüche 1 - 6, **dadurch gekennzeichnet, dass** der Schwingspiegel (6) von einem mikromechanischen Scannerspiegel gebildet ist.

8. Optoelektronische Vorrichtung nach Anspruch 7, **dadurch gekennzeichnet, dass** der mikromechanische Scannerspiegel ein plattenförmiges Spiegelelement (15) aufweist, welches mittels zwei ersten Torsionsstegen (16), die an gegenüberliegenden Seitenwänden des Spiegelelements (15) ausmünden und deren Längsachsen entlang einer ersten Drehachse $D_x$ verlaufen, an einem ersten Rahmen (17) befestigt sind, wobei der erste Rahmen (17) innerhalb eines zweiten Rahmens (18) liegt und über zwei entlang einer zweiten Drehachse Dy verlaufende zweite Torsionsstege (19) mit dem zweiten Rahmen (18) verbunden ist.

9. Optoelektronische Vorrichtung nach Anspruch 8, **dadurch gekennzeichnet, dass** das plattenförmige Spiegelelement (15) einen quadratischen Querschnitt aufweist und im Zentrum des ersten Rahmens (17) liegt, welcher im Zentrum des zweiten Rahmens (18) liegt, wobei die beiden Rahmen (17, 18) jeweils eine quadratische Kontur aufweisen.

10. Optoelektronische Vorrichtung nach einem der Ansprüche 8 oder 9, **dadurch gekennzeichnet, dass** in den parallel zur ersten Drehachse $D_x$ verlaufenden Wandsegmenten des ersten Rahmens (17) erste Antriebselektroden (20) angeordnet sind, mittels derer das Spiegelelement (15) bezüglich der ersten Drehachse $D_x$ drehbar ist.

11. Optoelektronische Vorrichtung nach einem der Ansprüche 8 - 10, **dadurch gekennzeichnet, dass** in den parallel zur zweiten Drehachse Dy verlaufenden Wandsegmenten des zweiten Rahmens (18) zweite Antriebselektroden (21) angeordnet sind, mittels derer der erste Rahmen (17) mit dem Spiegelelement (15) bezüglich der ersten Drehachse $D_x$ drehbar ist.

12. Optoelektronische Vorrichtung nach einem der Ansprüche 8 - 11, **dadurch gekennzeichnet, dass** das Spiegelelement (15) aus einer einkristallinen Siliziumplatte besteht, welche mit einer Aluminiumschicht beschichtet ist.

13. Optoelektronische Vorrichtung nach einem der Ansprüche 11 oder 12, **dadurch gekennzeichnet, dass** durch Einstellen der Anregungsfrequenzen der an den Antriebselektroden (20, 21) anliegenden Ansteuerspannungen der räumliche Verlauf der Abtastung der Abtastfläche (8) vorgebbar ist.

## Claims

1. Optoelectronic device for determining distance profiles of objects, with a transmitter emitting transmitted light beams, a receiver, which consists of an areal arrangement of receiving elements and onto which transmitted light beams (2) reflected at an object (7) are guided as received light beams (4) to the receiver (5), and an evaluating unit for evaluation of received signals generated in the receiving elements, wherein only the transmitted light beams (2) are deflected by way of an oscillating mirror (6) periodically in two spatial directions so that these scan a scanning surface (8) on the surface of the object (7),
**characterised in that** the evaluating unit is constructed for the purpose of evaluating the received signals of the receiving elements (5a) by a threshold value, that by means of the threshold value evaluation of the receiving elements (5a) the unlit receiving elements (5a) are detected within a scanning period and that during the following scanning period only the receiving elements (5a) which were previously lit as well as the adjacent elements thereof are utilised for the evaluation.

2. Optoelectronic device according to claim 1, **characterised in that** the transmitter (3) is formed by a laser diode.

3. Optoelectronic device according to one of claims 1 and 2, **characterised in that** the receiver (5) consists of a square arrangement of identically constructed receiving elements (5a).

4. Optoelectronic device according to any one of claims 1 to 3, **characterised in that** the distance determination is carried out in the receiving elements (5a) according to the light transit time method.

5. Optoelectronic device according to claim 4, **characterised in that** the distance measurement is carried out according to the phase measurement principle, wherein an amplitude modulation is imposed on the transmitted light beams (2) of the transmitter (3) and wherein for distance determination the phase difference between the transmitted light beams (2) emitted by the transmitter (3) and the received light beams (4) reflected by an object (7) back to a receiving element (5a) of the receiver (5) is determined.

6. Optoelectronic device according to claim 4, **characterised in that** the distance measurement is carried out in accordance with the pulse transit time method, wherein the transmitted light beams (2) are emitted by the transmitter (3) as trains of transmitted light pulses and wherein for distance determination the transit time of the transmitted light pulses emitted by the transmitter (3) and reflected as received light pulses by an object (7) back to a receiving element (5a) of the receiver (5) is determined.

7. Optoelectronic device according to any one of claims 1 to 6, **characterised in that** the oscillating mirror (6) is formed by a micromechanical scanner mirror.

8. Optoelectronic device according to claim 7, **characterised in that** the micromechanical scanner mirror comprises a plate-shaped mirror element (15), which is fastened to a first frame (17) by means of two first torsion webs (16), which communicate with opposite side walls of the mirror element (15) and the longitudinal axes of which extend along a first axis $D_x$ of rotation, wherein the first frame (17) lies within a second frame (18) and is connected with the second frame (18) by way of two second torsion webs (19) extending along a second axis $D_y$ of rotation.

9. Optoelectronic device according to claim 8, **characterised in that** the plate-shaped mirror element (15) has a square cross-section and lies in the centre of the first frame (17), which lies in the centre of the second frame (18), wherein the two frames (17, 18) each have a square profile.

10. Optoelectronic device according to one of claims 8 and 9, **characterised in that** first drive electrodes (20), by means of which the mirror element (15) is rotatable with respect to the first axis $D_x$ of rotation, are arranged in the wall segments, which extend parallel to the first axis $D_x$ of rotation, of the first frame (17).

11. Optoelectronic device according to any one of claims 8 to 10, **characterised in that** two drive electrodes (21), by means of which the first frame (17) is rotatable together with the mirror element (15) with respect to the first axis $D_x$ of rotation, are arranged in the wall segments, which extend parallel to the second axis $D_y$ of rotation, of the second frame (18).

12. Optoelectronic device according to any one of claims 8 to 11, **characterised in that** the mirror element (15) consists of a monocrystalline silicon plate coated with an aluminium layer.

13. Optoelectronic device according to one of claims 11 and 12, **characterised in that** the three-dimensional course of the scanning of the scanning surface (8) is predeterminable by setting the excitation frequencies of the control voltages applied to the drive electrodes (20, 21).

## Revendications

1. Dispositif optoélectronique pour la détermination de profils de distance d'objets, comprenant un émetteur émettant des rayons lumineux d'émission, un récepteur composé d'un agencement plan d'éléments de réception sur lesquels des rayons lumineux d'émission (2) réfléchis sur un objet (7) sont guidés vers le récepteur (5) en tant que rayons lumineux de réception (4), ainsi qu'une unité d'évaluation pour évaluer les signaux de réception générés dans les éléments de réception, seuls les rayons lumineux d'émission (2) étant déviés périodiquement dans deux directions de l'espace par un miroir oscillant (6), de sorte que ceux-ci balayent une surface de balayage (8) sur la surface de l'objet (7),
   **caractérisé en ce que** l'unité d'évaluation est conçue pour évaluer les signaux de réception des éléments de réception (5a) par rapport à une valeur seuil, que pendant une période de balayage, les éléments de réception (5a) non exposés sont détectés au moyen de l'évaluation de valeur seuil des éléments de réception (5a) et que pendant la période de balayage suivante, seuls les éléments de réception (5a) qui étaient précédemment exposés ainsi que leurs éléments voisins sont pris en compte pour l'évaluation.

2. Dispositif optoélectronique selon la revendication 1, **caractérisé en ce que** l'émetteur (3) est formé par une diode laser.

3. Dispositif optoélectronique selon une des revendications 1 ou 2, **caractérisé en ce que** le récepteur (5) est composé d'un agencement carré d'éléments de réception (5a) conformés de manière identique.

4. Dispositif optoélectronique selon une des revendications 1 à 3, **caractérisé en ce que** la détermination de distance dans les éléments de réception (5a) est réalisée selon la méthode du temps de parcours de la lumière.

5. Dispositif optoélectronique selon la revendication 4, **caractérisé en ce que** la mesure de distance est réalisée selon le principe de la mesure de phase, une modulation d'amplitude étant appliquée aux rayons lumineux d'émission (2) de l'émetteur (3) et la différence de phase entre les rayons lumineux d'émission (2) émis par l'émetteur (3) et les rayons lumineux de réception (4) réfléchis par un objet (7) vers un élément de réception (5a) du récepteur (5) étant déterminée pour mesurer la distance.

**6.** Dispositif optoélectronique selon la revendication 4, **caractérisé en ce que** la mesure de distance est réalisée selon la méthode du temps de parcours des impulsions, les rayons lumineux d'émission (2) étant émis par l'émetteur (3) sous la forme d'impulsions lumineuses d'émission et le temps de parcours des impulsions lumineuses d'émission émises par l'émetteur (3) et réfléchies par un objet (7) sous la forme d'impulsions lumineuses de réception vers un élément de réception (5a) du récepteur (5) étant déterminé pour mesurer la distance.

**7.** Dispositif optoélectronique selon une des revendications 1 à 6, **caractérisé en ce que** le miroir oscillant (6) est formé par un miroir de balayage micromécanique.

**8.** Dispositif optoélectronique selon la revendication 7, **caractérisé en ce que** le miroir de balayage micromécanique présente un élément réfléchissant (15) en forme de plaque, lequel est fixé à un premier cadre (17) au moyen de deux premières barrettes de torsion (16) qui aboutissent à des parois latérales opposées de l'élément réfléchissant (15) et dont les axes longitudinaux s'étendent suivant un premier axe de rotation $D_x$, le premier cadre (17) se trouvant à l'intérieur d'un deuxième cadre (18) et étant relié au deuxième cadre (18) par deux deuxièmes barrettes de torsion (19) qui s'étendent suivant un deuxième axe de rotation $D_y$.

**9.** Dispositif optoélectronique selon la revendication 8, **caractérisé en ce que** l'élément réfléchissant (15) en forme de plaque présente une section carrée et se trouve au centre du premier cadre (17), lequel se trouve au centre du deuxième cadre (18), les deux cadres (17, 18) présentant chacun un contour carré.

**10.** Dispositif optoélectronique selon une des revendications 8 ou 9, **caractérisé en ce que** de premières électrodes d'entraînement (20), au moyen desquelles on peut faire tourner l'élément réfléchissant (15) par rapport au premier axe de rotation $D_x$, sont disposées dans les segments de paroi du premier cadre (17) qui s'étendent parallèlement au premier axe de rotation $D_x$.

**11.** Dispositif optoélectronique selon une des revendications 8 à 10, **caractérisé en ce que** de deuxièmes électrodes d'entraînement (21), au moyen desquelles on peut faire tourner le premier cadre (17) avec l'élément réfléchissant (15) par rapport au premier axe de rotation $D_x$, sont disposées dans les segments de paroi du deuxième cadre (18) qui s'étendent parallèlement au deuxième axe de rotation $D_y$.

**12.** Dispositif optoélectronique selon une des revendications 8 à 11, **caractérisé en ce que** l'élément réfléchissant (15) est composé d'une plaque de silicium monocristallin qui est revêtue d'une couche d'aluminium.

**13.** Dispositif optoélectronique selon une des revendications 11 ou 12, **caractérisé en ce que** la distribution spatiale du balayage de la surface de balayage (8) peut être prescrite en réglant les fréquences d'excitation des tensions de commande appliquées aux électrodes d'entraînement (20, 21).

**Fig 1**

**Fig 2**

**Fig 3**

Fig 4a

Fig 4b

Fig 4c

**Fig 5a**

**Fig 5b**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19821974 A1
- DE 19757595 C2
- US 5418608 A
- US 5760886 A